# EUROPEAN PATENT APPLICATION

(11) **EP 4 391 224 A1**
(43) Date of publication of application: **26.06.2024**
(21) Application number: 22215894.1
(22) Date of filing: 22.12.2022
(51) Int. Cl.: H01Q 1/32, G01S 13/931, H01Q 1/52, H01Q 21/00

(54) **INTEGRATED VEHICLE ANTENNA ABSORBER**

(71) Applicant: Magna Electronics Sweden AB, 447 37 Vårgårda (SE)
(72) Inventor: KONSTANTINIDIS, Konstantinos, 97464 Niederwerrn (DE); POIGER, Walter, 97464 Niederwerrn (DE)
(74) Representative: Westpatent AB

(57) **Abstract**

The present disclosure relates to a vehicle sensor assembly (200, 500) comprising a waveguide part (218A/218B, 402) and an antenna part (205, 400) operably coupled with the waveguide part (218A/218B, 402). The antenna part (205, 400) comprises an array of antenna slots (215A/215B, 416) configured to deliver electromagnetic radiation from the waveguide part (218A/218B, 402) therethrough. The antenna part (205, 400) is at least partially defined by an absorptive material (110, 210, 410) configured to reduce electromagnetic radiation reflections and may further comprise a conductive and/or metallic coating (120, 220, 420).

## Description

Disclosed herein are various embodiments of sensor assemblies, such as RADAR sensor assemblies for vehicles. In some embodiments, sensor assemblies disclosed herein comprise an antenna portion and/or piece comprising dual properties and/or materials, which may allow for combining the functionality of an electromagnetic absorber with that of an antenna.

In some embodiments, this combination may be achieved by forming certain portions of the sensor/antenna/waveguide assembly from a suitable lossy and/or absorptive material configured to cancel or at least reduce electromagnetic signal reflection interference and applying an electrically conductive coating to certain regions of the assembly, such as to the regions defining antenna slots, regions adjacent to the antenna slots, and/or other regions in which electrical conductivity is needed or desired.

In some embodiments, the antenna slots may be formed in a separate piece and/or layer, such as to an antenna plate configured to be coupled with a separate waveguide piece of the assembly. This piece may be made up of, either wholly or partially, a suitable lossy and/or absorptive material configured to reduce electromagnetic interference caused by, for example, fascia reflections. Selected portions of this separate piece may then be electroplated, coated, and/or treated with a suitable metal or other electrically conductive material. For example, in some embodiments, the walls defining antenna slots in the antenna piece may be treated with such a metal or other conductive material layer, which may be helpful in improving performance in near field regions. In some embodiments, other regions of the antenna plate/piece may be treated, such as in some cases an entire surface and/or side of the plate that is configured to be coupled with a waveguide piece of the assembly.

In other embodiments, the entire assembly, or at least a larger part of the assembly comprising both antenna and waveguide features, may be formed from a unitary, single structure, such as a molded piece, casting, or the like, for example. In some such embodiments, this piece may be molded from the aforementioned absorptive and/or lossy material and then selectively coated and/or treated with the aforementioned conductive material(s) in regions where conductivity may be needed or desired. For example, the regions defining the antenna slots may, in such embodiments, may be so treated/coated, in some cases along with adjacent regions. Other regions, such as posts or other structures defining the waveguides, may also be treated/coated, if desired.

In a particular example of a vehicle sensor according to some embodiments, the assembly may comprise a waveguide part and an antenna part operably coupled with the waveguide part. In some embodiments, the antenna part may comprise an array of antenna slots, wherein each of the antenna slots is configured to deliver electromagnetic radiation from the waveguide part therethrough. The antenna part may be at least partially defined by a lossy and/or absorptive material configured to reduce electromagnetic radiation reflections. The antenna part may further comprise an electrically conductive and/or metallic coating, which may be applied to the absorptive material of the antenna part, at least in part, to provide desired properties in these regions.

In some embodiments, the waveguide part may comprise a first layer of the assembly, such as a plate, for example, and the antenna part may comprise a second layer of the assembly, such as a molded piece, coupled to the first layer. In some such embodiments, the electrically conductive and/or metallic coating may be applied to an entire surface, or at least substantially an entire surface, of an inner side of the second layer adjacent to the first layer. In some embodiments, however, the electrically conductive and/or metallic coating may be applied only partially to an outer side of the second layer. In some embodiments, the electrically conductive coating may be applied to a region of the outer side of the second layer adjacent to one or more, or in some cases each, of the antenna slots.

In some embodiments, the waveguide part may comprise an array of waveguide grooves. In some such embodiments, the antenna part and the array of waveguide grooves may both be part of an integrally formed mold and/or casting. In some such embodiments, each waveguide groove of the array of waveguide grooves may be formed by two or more opposing rows of posts formed in the mold/casting. In some such embodiments, the electrically conductive coating may be applied to each of the posts.

In some embodiments, at least a subset of the antenna slots may comprise an array of staggered antenna slot arrays each comprising a first row of antenna slots extending along a first line and a second row of antenna slots extending along a second line and offset from the first row of antenna slots. In some such embodiments, the electrically conductive coating may be applied to walls defining each antenna slot of each staggered antenna slot array. In some cases, this coating may be applied so as to wholly cover each of these walls.

In some embodiments, each of the staggered antenna slot arrays may be positioned in a respective bounded region of the antenna part in which each slot of each staggered antenna slot array is wholly contained. In some such embodiments, the electrically conductive coating may be applied to each of the bounded regions of the antenna part.

In some embodiments, the waveguide part may comprise a metallic block and/or the antenna part may comprise a plate coupled to the metallic block. In some such embodiments, the plate may comprise an electrically conductive coating at least substantially covering the plate on a side facing the metallic block.

In some embodiments, the electrically conductive and/or metallic coating may be applied to each wall defining each of the antenna slots.

In some embodiments, the electrically conductive and/or metallic coating may comprise an electroplated coating.

The features, structures, steps, or characteristics disclosed herein in connection with one embodiment may be combined in any suitable manner in one or more alternative embodiments.

### BRIEF DESCRIPTION OF THE DRAWINGS

Non-limiting and non-exhaustive embodiments of the disclosure are described, including various embodiments of the disclosure with reference to the figures, in which:
FIG. 1 is a cross-sectional view of an antenna/absorber piece, which may comprise part of a RADAR sensor assembly according to some embodiments;
FIG. 2 is a top view of a RADAR sensor assembly according to other embodiments;
FIG. 3 is bottom view of the RADAR sensor assembly of FIG. 2;
FIG. 4 depicts an antenna/absorber plate according to other embodiments, which may be coupled with a waveguide piece of a RADAR sensor assembly;
FIG. 5 is an exploded view of the antenna/absorber plate of FIG. 4 and an adjacent waveguide piece; and
FIG. 6 is a perspective view of the complete RADAR sensor assembly of FIG. 5.

### DETAILED DESCRIPTION

A detailed description of apparatus, systems, and methods consistent with various embodiments of the present disclosure is provided below. While several embodiments are described, it should be understood that the disclosure is not limited to any of the specific embodiments disclosed, but instead encompasses numerous alternatives, modifications, and equivalents. In addition, while numerous specific details are set forth in the following description in order to provide a thorough understanding of the embodiments disclosed herein, some embodiments can be practiced without some or all of these details. Moreover, for the purpose of clarity, certain technical material that is known in the related art has not been described in detail in order to avoid unnecessarily obscuring the disclosure.

The embodiments of the disclosure may be best understood by reference to the drawings, wherein like parts may be designated by like numerals. It will be readily understood that the components of the disclosed embodiments, as generally described and illustrated in the figures herein, could be arranged and designed in a wide variety of different configurations. Thus, the following detailed description of the embodiments of the apparatus and methods of the disclosure is not intended to limit the scope of the disclosure, as claimed, but is merely representative of possible embodiments of the disclosure. In addition, the steps of a method do not necessarily need to be executed in any specific order, or even sequentially, nor need the steps be executed only once, unless otherwise specified. Additional details regarding certain preferred embodiments and implementations will now be described in greater detail with reference to the accompanying drawings.

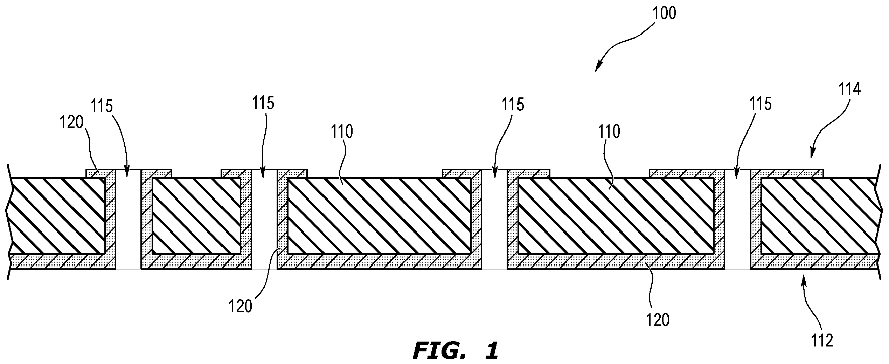

FIG. 1 depicts a cross-sectional view of a waveguide/sensor assembly 100, or a portion thereof, such as a RADAR sensor assembly for a vehicle. In this figure, a portion 110 of the assembly 100 preferably comprising an absorber or an absorptive material is shown making up the bulk/core of the portion of the assembly 100 depicted in the figure.

A series of antenna slots 115 extend through portion 110. Although not shown in FIG. 1, each antenna slots 115 would typically be operably coupled with a waveguide, such as, for example, a waveguide comprising waveguide grooves. Thus, as described in greater detail below, in some embodiments, assembly 100 may comprise only a selected portion of a larger waveguide and/or antenna assembly, such as a plate and/or layer of such a larger assembly with another portion of the larger assembly defining the waveguides. Alternatively, assembly 100 may comprise a single, unitary, and/or self-contained assembly that itself defines the waveguides. More specific examples of both of these embodiments will be described in greater detail in connection with other figures below.

In preferred embodiments, the absorptive material making up portion 110 may comprise a lossy material configured to absorb electromagnetic radiation/signals, such as RADAR signals. Thus, in some such embodiments, this lossy material may have a dielectric constant of between about 4 and about 12. In some such embodiments, the dielectric constant may be between about 6 and about 9. In a very specific example of a preferred embodiment, the dielectric constant may be about 8.

In other preferred embodiments, the absorptive material may comprise a lossy material having a dielectric constant of between about 6 and about 14. In some such embodiments, the dielectric constant may be between about 9 and about 14 or between about 6 and about 9.

In preferred embodiments, either in addition to having a preferred dielectric constant or instead of having a preferred dielectric constant, the absorptive material of portion 110 (and other similar absorptive portions/pieces disclosed herein) may have a dielectric loss tangent of between about 0.1 and about 0.7. More preferably, the dielectric loss tangent of the material may be between about 0.15 and about 0.65. In some such embodiments, the dielectric loss tangent of the material may be between about 0.3 and about 0.6, or more preferably between about 0.5 and about 0.6. In a very specific example of a preferred embodiment, the dielectric loss tangent of the material may be about 0.56.

In other preferred embodiments, either in addition to having a preferred dielectric constant or instead of having a preferred dielectric constant, the absorptive material may have a dielectric loss tangent of between about 0.2 and about 0.6. In some such embodiments, the dielectric loss tangent of the material may be between about 0.3 and about 0.6, or between about 0.2 and about 0.3. Moreover, it should be understood that, within a given design, one or both of these parameters (dielectric constant and/or dielectric loss tangent) may vary within about +/- 20%.

The lossy and/or absorptive material of assembly 100 has an electrically conductive coating 120, such as a metallic coating in preferred embodiments. In the depicted embodiment, metallic coating 120 extends along each of the walls defining each of the various antenna slots 115. In addition, in the depicted embodiment, the entire side/surface of portion 110 on a first side 112 of assembly 100 comprises metallic coating 120. A second side 114 of assembly 100 opposite from first side 112 only partially comprises metallic coating 120, with the coating 120 extending along side 114 only in the regions adjacent to the antenna slot 115 openings.

In some embodiments, the conductive and/or metallic coating 120 may comprise, for example, Copper, Nichrome, Aluminium, Silver, or Zinc. As those of ordinary skill in the art will appreciate, different coating materials may be more suitable for specific processes, applications, and/or functions.

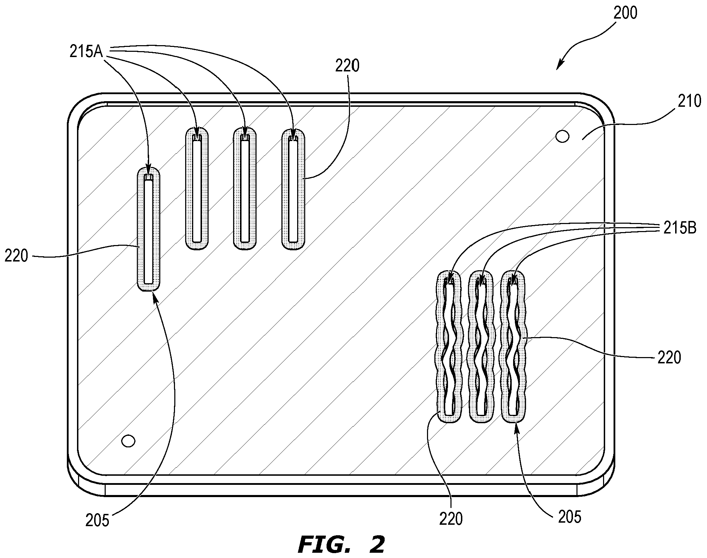

Although in the embodiments of FIG. 1 and FIG. 2, the coating 120/220 is applied only partially between adjacent slots 115/215A/215B, in alternative embodiments, this coating may instead be applied continuously from slot to slot. Similarly, in other embodiments, the coating may be applied only along the slot walls and need not be applied between the slots along the adjacent surface(s) at all, allowing absorptive material to wholly extend between and around the slots along the adjacent surfaces, such as the upper and/or lower surface.

However, in embodiments in which the coating extends beyond the region defining the slots, preferably the coating extends symmetrically in this adjacent region, such as in the adjacent surface (surface 114 in FIG. 1 and the surface depicted in FIG. 2, for example). In some such embodiments, the coating may at least extend symmetrically along the azimuth plane in this area. For example, in the embodiment of FIG. 2, preferably the coating 220 extends symmetrically along the long sides of the slots 215A and/or 215B, as shown in FIG. 2, due to the higher influence on the antenna near fields in these regions.

As will be best understood by those of ordinary skill in the art after reviewing additional details and embodiments provided below, various alternative embodiments are contemplated in which the coating 120 is selectively applied only in regions where required or reasonably necessary, such as parts/portions requiring electrical conductivity. Thus, using the example of FIG. 1, by providing a metallic coating 120 that extends entirely along one surface, this surface may contact an adjacent waveguide portion of the assembly. By using a lossy/absorptive material for the base/core of assembly/piece 100 and selectively providing a metallic coating 120 in this manner, the antenna function and the absorber function, which are typically provided by two separate pieces of a RADAR/sensor assembly, may be combined or integrated into one piece.

In preferred embodiments, conductive and/or metallic coating 120 may comprise an electroplated coating. However, in other embodiments and related implementations, coating 120 may be applied in other ways, such as using, for example, metal patterning, metal deposition, and/or photolithography. In other embodiments and/or implementations, conductive and/or metallic coatings may be applied using, for example, physical vapor deposition (PVD) processes, which may include sputter deposition (sputtering) and evaporation.

In some embodiments and implementations, the coating process may include the use of plasma cleaning in order to give a clean surface for the coating to be applied on. For example, a thin adhesive layer of chromium may be sputtered in order to improve the adhesion between absorber material and the conductive and/or metallic coating.

As another example, in some embodiments and implementations, selective plating (partially coating) may be applied by creating a pattern on a mask. This process may involve chemical etching, micromachining, and/or photolithography. A mask for this purpose may be, for example, a glass plate patterned with chromium on one side. In the case of photolithography, by projecting UV light onto the mask, the pattern may be printed to the photoresist, since glass is transparent under UV light while chromium is opaque. Another potentially suitable approach may involve plating the structure and then creating a negative pattern on the mask, which may then be subject to an etching process again.

By providing a metamaterial or other material having an absorptive material and selectively applied and/or tuned conductive materials in desired regions, absorption properties, such as absorption for reflection cancellation due to, for example, fascia reflections, may be achieved without unduly impacting antenna performance, which often happens when an absorptive material is used in regions close to the antennae near field(s). In other words, by providing artificial properties on an absorptive type of material, the principles disclosed herein may allow for engineering electromagnetic properties in such a way that cannot be exhibited by conventional materials. An absorber with such features and/or characteristics may thereby utilize its effective complex permittivity and permeability to address various issues present in, for example, vehicle antennae/sensors, such as reflection cancellation, while minimizing or at least reducing antenna performance.

It should be understood that a wide variety of alternative configurations are contemplated and/or would be available to those of ordinary skill in the art after having received the benefit of this disclosure. For example, in some embodiments, the walls defining antenna slots 115 may only be partially covered with a suitable electroplating or other conductive material 120. Similarly, some antenna slots 115 in certain configurations may be left without any such conductive layer.

In addition, some embodiments may be configured such that side 112 has certain portions that lack conductive layer 120 such that the absorptive material 110 is exposed. Similarly, some embodiments may comprise no conductive layer 120 along side 114, or may comprise a larger portion of this side 114 with conductive layer 120 depending upon, for example, the spacing of the antenna slots, the desired use of the antenna/sensor, etc.

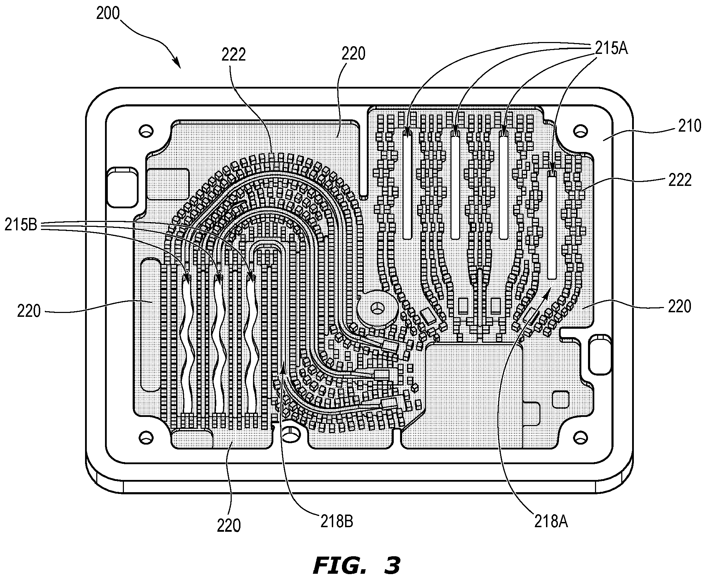

FIGS. 2 and 3 depict opposite sides, respectively, of an embodiment of a waveguide/sensor assembly 200, or a portion thereof, according to another embodiment. The waveguide/sensor assembly 200 can be regarded as a vehicle sensor assembly. FIG. 2 depicts a first side of assembly 200, which includes a first array of antenna slots 215A and a second array of antenna slots 215B. In some embodiments, array of antenna slots 215A may comprise an RX section and antenna slots 215B may comprise a TX section of the assembly 200.

Similarly, respective waveguide grooves 218A/218B may be formed, which may direct electromagnetic radiation to and/or from one or more respective antenna slots 215A/215B.The grooves 218A/218B may according to some aspects constitute a waveguide part.

RX slots 215A comprise elongated, straight slots, whereas TX slots 215B comprise curved or "wavy" slots that, as shown in FIG. 2, oscillate back and forth between opposing sides of an elongated axis. TX slots 215B further comprise an optional phase-compensating feature. In the depicted embodiment, this is accomplished by applying one or more angled and/or tapered sections, such as tapered grooves or cutouts, along the slots. Thus, the depicted embodiment illustrates a tapered and/or angled section/surface that is formed along both opposing sidewalls defining each antenna slot 215B at points of maxima for the oscillating pattern of the respective slot.

These tapering sections may comprise a stepped taper or ledge or may comprise a smoothly transitioning taper. In other words, a ledge may be formed at the starting point of the taper and therefore, rather than a smooth taper between the outer surface of the structure defining the slot 215B and the starting point of the tapering section, the transition of the tapering section may be immediate from the starting point, which is at a ledge of section to the outer surface of the structure forming the slot.

In some embodiments, all of the peaks/maxima of the oscillating pattern of slots 215B may comprise a phase-compensating feature. Alternatively, in some embodiments, only a subset of the peaks/maxima defined by slots 215B may comprise such a feature. Of course, in still other embodiments, no such phase-compensating feature may be included at all.

In addition, in some embodiments in which slots 215B intermittently oscillate on opposite sides of its respective elongated axis and/or adjacent waveguide along at least a portion thereof, each of at least a subset of the plurality of the tapering surfaces/sections may be spaced apart in a manner that coincides with the intermittent oscillation of the slots 215B. In some such embodiments, all of the tapering surfaces/sections may be spaced apart in a manner that coincides with the intermittent oscillation of the slots 215B.

It should be understood, however, that the stepped taper of assembly 200 is but an example for purposes of illustration and that a wide variety of alternative embodiments are contemplated. For example, although only a single step is used in the tapered section of assembly 200, any number of steps may be used in between the one step shown in this embodiment and an effectively infinite number of steps involved in a smooth taper.

Each of the tapering sections of assembly 200 may comprise a stepped taper extending between a first edge of the ledge formed by the tapering section, which first edge may be positioned in between the external surface of the structure forming slots 215B and the internal surface of this structure, and a second edge of a concavely curved surface (in some cases, a semi-circular concavely curved surface), the second edge extending along the external surface of the aforementioned structure. Again, any number of intermediate steps may be used as desired.

In preferred embodiments, these sections/surfaces may be positioned so as to alternate and be staggered along the opposing slot sidewalls such that each section is positioned at a particular point along the axis of along only one sidewall of each respective slot 215B. In addition, even more preferably, each section may be formed along one of the peaks of each oscillating respective slot 215B. Thus, for example, if the antenna slot defines, or at least substantially defines, a sine wave, each of the tapering/phase-compensating sections is preferably formed along one of the peaks of the sine wave extending towards the axial center of the slot 215B and/or accompanying waveguide.

In some embodiments, all of the aforementioned peaks may comprise a phase-compensating feature. Alternatively, only a subset of the peaks defined by each respective slot 215B may comprise such a feature.

In some embodiments, each respective slot 215B may intermittently oscillate on opposite sides of the elongated axis of each respective slot 215B and/or adjacent waveguide along at least a portion thereof. In some such embodiments, each of at least a subset of the plurality of the tapering surfaces/sections may be spaced apart in a manner that coincides with the intermittent oscillation of each respective slot 215B. In some such embodiments, all of the tapering surfaces/sections may be spaced apart in a manner that coincides with the intermittent oscillation of each respective slot 215B.

Thus, for example, in some embodiments, each of the plurality of tapering sections surfaces may comprise a first set of tapering surfaces on a first side of each respective slot 215B and a second set of tapering surfaces on a second side of each respective slot 215B opposite the first side. Preferably, the tapering surfaces/sections alternate such that each tapering surface of first set of tapering surfaces is positioned adjacent to one or more tapering surfaces of the second set of tapering surfaces along the axis of each respective slot 215B and each tapering surface of the second set of tapering surfaces is positioned adjacent to one or more tapering surfaces of the first set of tapering surfaces along the axis, again, preferably alternating back and forth across each respective slot 215B.

Each of the plurality of tapering surfaces/sections may comprise a curved, tapering surface, as shown in FIG. 2. Indeed, in the depicted embodiment, each of the tapering surfaces/sections is defined, at least in part, by a semi-circular cutout, which may be formed at the exterior surface of each respective slot 215B, as a concave region from the convex region of the curve defined by each respective slot 215B, and then may taper down to a corner, edge, or starting point of the taper. Thus, preferably, the tapers of one or more (or each) of the tapering sections do not extend all the way between opposing surfaces of the structure of assembly 200 defining slots 215B, but rather start at a point between the opposing surfaces of this structure and extend to the upper/outer portion of slots 215B on the side opposite the aforementioned waveguides, which are on the opposite side of assembly 200, as shown in FIG. 3.

However, in embodiments in which one or more of the tapering sections has a starting point between opposing surfaces of the structure defining the slot(s) 215B, it may be desirable from a manufacturing standpoint that the starting point(s) of the tapering sections be sufficiently spaced from the (typically inner) surface from which the slot(s) 215B originates. Thus, in some embodiments, the starting point may be located at a point no less than 20%, or no less than about 20%, of the distance from the lower/inner and/or originating surface of the slot(s) to the upper/outer and/or terminating surface of the slot(s).

Other embodiments are contemplated in which the tapering surfaces/sections may instead be straight or non-curved. In addition, in some embodiments, the curvature of the tapering sections may extend in multiple dimensions. In other words, a semi-spherically curved surface may be formed within one or more of these tapering sections if desired. Additional details regarding these phase-compensating features can be found in U.S. Patent Application Serial No. 17/370,922 titled PHASE-COMPENSATED WAVEGUIDES AND RELATED SENSOR ASSEMBLIES, the entire contents of which are hereby incorporated by reference herein.

Preferably, each of the various antenna slots, including both RX slots 215A and TX slots 215B, is defined and/or coated, wholly or at least in part, by an electrically conductive plating/coating/layer 220. Although the walls defining these slots are not shown in FIG. 2, in the depicted embodiment, this conductive material 220 also extends adjacent to each of the slots 215A/215B on the adjacent surface, as shown in FIG. 2. The material making up assembly 200 otherwise may comprise an absorptive material 210, which may comprise any of the absorptive materials mentioned herein.

FIG. 3 depicts assembly 200 from the side opposite to that of FIG. 2. On this side, the waveguide structures of the assembly 200 are depicted. More particularly, several rows of posts 222 are depicted. In between two or more rows of posts on each opposing side, a series of waveguides are defined. Of course, in alternative embodiments, waveguides may be defined in between a single row of posts on each side or waveguides may be defined in other ways, such as trench-style waveguides lacking posts altogether.

In addition to coating or otherwise applying the conductive material layer 220 to the walls defining antenna slots 215A and 215B, this conductive material layer 220 may also be applied to each of the posts 222, either wholly or in part (such as on each top surface of each post 222). As shown in FIG. 3, however, some embodiments, including the depicted embodiment, may comprise an electroplating or other conductive layer/coating 220 applied to other regions of the waveguide side of the assembly 200. For example, in the depicted embodiment, all of the posts 222 are conductively coated in their entireties, along with the adjacent waveguide regions. In some embodiments, the entire surface defining the waveguides may be coated with a suitable electrically conductive material. However, as shown in FIG. 3, in some embodiments, certain regions of the assembly 200 not requiring conductivity and/or that may benefit from exposed absorptive materials need not be coated/layered with material 220.

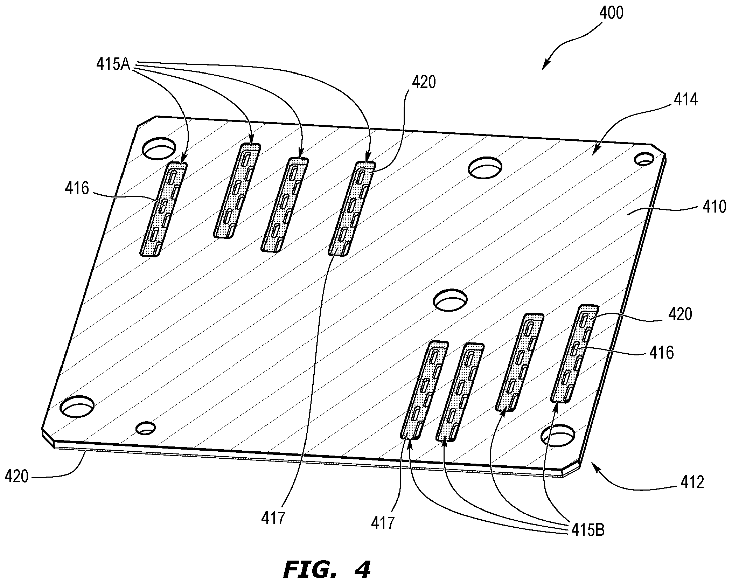

FIGS. 4-6 depict another antenna and/or sensor assembly according to still other embodiments. In this embodiment, a separate plate or other piece is used for the antenna slots of the assembly. This separate piece is preferably formed, in some cases wholly formed (aside from the conductive coating(s)/cover(s)/treatment(s) discussed below), from a suitable absorptive material, including any of those discussed elsewhere herein. The separate antenna/absorber piece may then be treated in selected regions with a metal or other electrically conductive material, including any of those materials discussed herein.

In preferred embodiments and related implementations, this treatment comprises an electroplating of a metal in the regions defining the sidewalls of the antenna slots. In some cases, this treatment comprises further coating of adjacent regions of the antenna/absorber piece, such as regions extending along an upper surface of the piece adjacent to the antenna slots in the case of the piece being a plate. Similarly, the lower side/surface of the assembly may be treated/coated, in some cases so as to encompass the entire lower side/surface, to facilitate desired coupling with the requisite electrical contact with another piece/layer of the assembly. Thus, in the case of the antenna/absorber piece being a plate, the entire lower surface may be treated/coated, or at least substantially entirely treated/coated, with the desired conductive material(s).

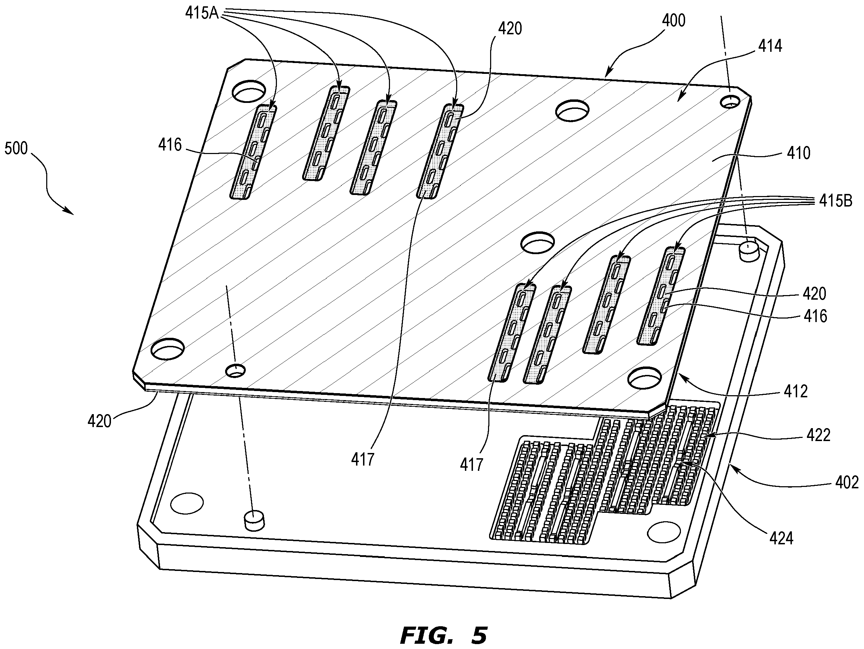

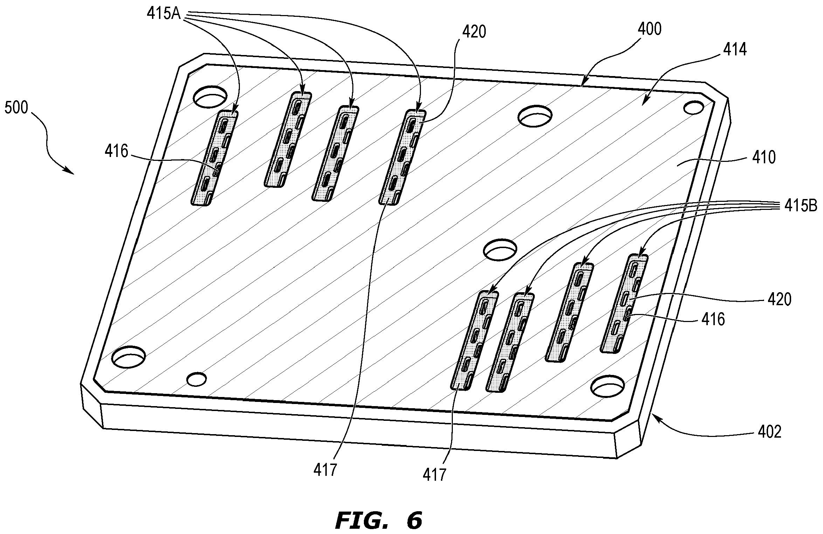

In FIG. 4, an antenna plate or piece 400, generally an antenna part 400, but more particularly an antenna plate 400 in the depicted embodiment, is shown. As described in greater detail below, antenna plate 400 defines the antenna slots of the assembly and may be coupled with one or more other elements to complete the assembly, such as a waveguide piece 402, generally a waveguide part 402, shown in FIGS. 5 and 6. Preferably, the antenna/absorber piece 400 comprises-in some cases wholly comprises aside from the conductive materials described below-an absorptive material 410, which may, for example, reduce signal degradation due to reflection from fascia materials of a vehicle and the like by absorbing such reflected signals. According to some aspects, the waveguide part 402 comprises a first layer 402 of a vehicle sensor assembly 500 having multiple layers and the antenna part 400 comprises a second and/or upper layer 400 of the assembly 500 coupled to the first layer 402.

Alternatively, as described above and depicted in the embodiment of FIGS. 2 and 3, the waveguide part 218A/218B and antenna part 205 may be defined as respective portions of a larger, unitary piece, such as assembly 200. In this case, for example, the waveguide part may comprise, at least in part, one or more waveguide grooves, such as waveguide grooves 218A/218B, and the antenna part 205 of the assembly may comprise antenna slots 215A/215B. According to some aspects, the waveguide part 218A/218B comprises an array of waveguide grooves 218A/218B), and the antenna part 205 and the array of waveguide grooves 218A/218B are both part of an integrally formed casting. According to some further aspects, each waveguide groove 218A/218B of the array of waveguide grooves 218A/218B is formed by two or more opposing rows of posts 222 formed in the casting.

A series of antenna slot arrays may be formed in antenna/absorber piece 400. In some embodiments, these antenna slot arrays may, as mentioned above, be divided into transmission and receiving antenna slot arrays. Thus, in the depicted embodiment of FIGS. 4-6, a first array of antenna slot arrays 415A, which may comprise RX antenna slots 416 is provided and a second array of antenna slot arrays 415B, which may comprise TX antenna slots 416, is provided at a region preferably maximally, or at least substantially maximally, spaced apart from the RX antenna slot arrays 415A on the antenna/absorber piece 400.

Unlike the antenna slots of the embodiments previously discussed, antenna slot arrays 415A and 415B are made up of individual collections or arrays of shorter, staggered antenna slots 416. Thus, arrays 415A each comprises a plurality of relatively shorter antenna slots 416 extending in two rows offset with respect to one another. As also shown in FIG. 4, some of the arrays themselves may be offset with respect to one another. Similarly, arrays 415B may comprise staggered antenna slots 416 extending in two offset rows and each individual array 415B may be offset from one or more adjacent arrays 415B (although some such arrays 415B may be aligned, as is the case with the first two such arrays 415B). According to some aspects, at least a subset of the antenna slots 215A/215B, 416 is defined in an array of staggered antenna slot arrays 415A/415B each comprising a first row of antenna slots 416 extending along a first line and a second row of antenna slots 416 extending along a second line and offset from the first row of antenna slots 416.

In the depicted embodiment, each of the individual arrays of antenna slots 416 in both arrays 415A and 415B is positioned within its own bounded and recessed region 417 in which each of the slots 416 of each such array 415A/415B is wholly contained. In the depicted embodiment, each of these aforementioned regions 417 is treated, such as electroplated, with a conductive material, which may comprise any of the conductive materials mentioned herein. According to some aspects, each of the staggered antenna slot arrays 415A/415B is positioned in a respective bounded region 417 of the antenna part 400 in which each slot 416 of each staggered antenna slot array 415A/415B is wholly contained, and wherein the electrically conductive coating 420 is further applied to each of the bounded regions 417 of the antenna part 400.

Preferably, this treatment also extends, at least partially, but preferably wholly, within each of the individual slots 416 within each staggered slot array 415A/415B. Although each of the aforementioned regions 417 is recessed from an adjacent outer side 414, it is contemplated that alternative embodiments need not comprise recessed regions. Rather, bounded regions 417 containing all, or substantially all, of the staggered slots 416 may instead be formed by extending the electroplated or otherwise treated regions within a desired region about each of the various slots 416, which region may but need not necessarily have a shape identical or similar to the recessed regions 417 depicted in FIG. 4.

An inner side 412 of antenna/absorber piece 400, which is opposite to the outer side 414, may be electroplated, coated, or otherwise treated with a conductive material 420 that according to some aspects constitutes an electrically conductive coating, such as any of those materials mentioned herein. In some embodiments, the entire surface of the inner side 412 may be treated in this manner. However, alternative embodiments are contemplated in which this side may only be treated in certain areas as needed. According to some aspects, the electrically conductive coating 420 is applied only partially to the outer side 414 of the second layer 400. According to some aspects, the electrically conductive coating 420 is applied to a region of the outer side 414 of the second layer 400 adjacent to each of the antenna slots 416. According to some aspects, the electrically conductive coating 420 is applied to walls defining each antenna slot 416 of each staggered antenna slot array 415A/415B. According to some further aspects, the electrically conductive coating 420 is applied to entire surfaces of each of the walls defining each antenna slot 416 of each staggered antenna slot array 415A/415B.

FIG. 5 is an exploded view depicting a more complete assembly 500 including antenna/absorber piece 400 and an adjacent waveguide piece 402 and FIG. 6 is a perspective view illustrating how antenna/absorber piece 400 is coupled with the adjacent waveguide piece 402. Waveguide piece 402 may define-in some cases integrally define by way of a casting, for example, or the like-one or more waveguides.

Although a wide variety of alternative embodiments are contemplated and/or would be apparent to those ordinary skill in the art after having received the benefit of this disclosure, in the depicted embodiment, waveguides are defined comprising notches 424 that are positioned in between adjacent ridges and which may further comprise an opening or slot extending from the upper surface shown in FIG. 5 to the lower surface of waveguide piece 402, the features of which are not shown in FIG. 5.

Portions of these waveguides may, as also shown in FIG. 5, be defined by a series of posts 422. These waveguide structures, ridges, and/or notches 424 may be formed or otherwise disposed on both sides of antenna/absorber piece 400, if desired/needed. Waveguide piece 402 may, in some embodiments, comprise a casting, such as a casting comprising a Zinc or other suitable preferably metal or metallic material. However, in other contemplated embodiments, waveguide piece 402 may comprise a plastic or other material. In some such embodiments, metallic inserts, coatings, or the like may be used if desired, such as conductive coatings positioned on certain elements of the assembly 500, such as posts 422. In typical sensor assemblies, which, as previously mentioned, may be configured specifically for use in connection with vehicles, other structures may be combined with antenna/absorber piece 400 and waveguide piece 402, such as radomes, electronic components to generate the electromagnetic signals, and the like.

According to some aspects, the waveguide part 402 comprises a metallic block, wherein the antenna part 400 comprises a plate 400 coupled to the metallic block, and the plate 400 comprises an electrically conductive coating 420 at least substantially covering the plate 400 on a side 412 facing the metallic block.

According to some aspects, the electrically conductive coating 120, 220, 420 is applied to each wall defining each of the antenna slots 215A/215B, 416. According to some further aspects, the electrically conductive coating 120, 220, 420 comprises an electroplated, metallic coating.

It should be understood that whereas preferred embodiments may be used in connection with vehicle sensors, such as vehicle RADAR modules or the like, the principles disclosed herein may be used in a wide variety of other contexts, such as other types of RADAR assemblies, including such assemblies used in aviation, maritime, scientific applications, military, and electronic warfare. Other examples include point-to-point wireless links, satellite communication antennas, other wireless technologies, such as 5G wireless, and high-frequency test and scientific instrumentation. Thus, the principles disclosed herein may be applied to any desired communication sub-system and/or high-performance sensing and/or imaging systems, including medical imaging, security imaging and stand-off detection, automotive and airborne radar and enhanced passive radiometers for earth observation and climate monitoring from space.

The foregoing specification has been described with reference to various embodiments and implementations. However, one of ordinary skill in the art will appreciate that various modifications and changes can be made without departing from the scope of the present disclosure. For example, various operational steps, as well as components for carrying out operational steps, may be implemented in various ways depending upon the particular application or in consideration of any number of cost functions associated with the operation of the system. Accordingly, any one or more of the steps may be deleted, modified, or combined with other steps. Further, this disclosure is to be regarded in an illustrative rather than a restrictive sense, and all such modifications are intended to be included within the scope thereof. Likewise, benefits, other advantages, and solutions to problems have been described above with regard to various embodiments. However, benefits, advantages, solutions to problems, and any element(s) that may cause any benefit, advantage, or solution to occur or become more pronounced, are not to be construed as a critical, a required, or an essential feature or element.

Those having skill in the art will appreciate that many changes may be made to the details of the above-described embodiments without departing from the underlying principles of the invention. The scope of the present inventions should, therefore, be determined only by the following claims.

## Claims

1. A vehicle sensor assembly (200, 500), comprising:
a waveguide part (218A/218B, 402); and
an antenna part (205, 400) operably coupled with the waveguide part (218A/218B, 402), wherein the antenna part (205, 400) comprises an array of antenna slots (215A/215B, 416), and wherein each of the antenna slots (215A/215B, 416) is configured to deliver electromagnetic radiation from the waveguide part (218A/218B, 402) therethrough,
**characterized in that** the antenna part (205, 400) is at least partially defined by an absorptive material (110, 210, 410) configured to reduce electromagnetic radiation reflections, and wherein the antenna part (205, 400) further comprises an electrically conductive coating (120, 220, 420).

2. The vehicle sensor assembly (200, 500) of claim 1, wherein the waveguide part (402) comprises a first layer (402) of the assembly (200, 500), and wherein the antenna part (400) comprises a second layer (400) of the assembly (200, 500), coupled to the first layer (402).

3. The vehicle sensor assembly (200, 500) of claim 2, wherein the electrically conductive coating (120, 220, 420) is applied to an entire surface of an inner side (412) of the second layer (400) adjacent to the first layer (402).

4. The vehicle sensor assembly (200, 500) of claim 2 or claim 3, wherein the electrically conductive coating (120, 220, 420) is applied only partially to an outer side (414) of the second layer (400).

5. The vehicle sensor assembly (200, 500) of any of claims 2-4, wherein the electrically conductive coating (120, 220, 420) is applied to a region of the outer side (414) of the second layer (400) adjacent to each of the antenna slots (416).

6. The vehicle sensor assembly (200, 500) of claim 1, wherein the waveguide part (218A/218B) comprises an array of waveguide grooves (218A/218B), and wherein the antenna part (205) and the array of waveguide grooves (218A/218B) are both part of an integrally formed casting.

7. The vehicle sensor assembly (200, 500) of claim 6, wherein each waveguide groove (218A/218B) of the array of waveguide grooves (218A/218B) is formed by two or more opposing rows of posts (222) formed in the casting.

8. The vehicle sensor assembly (200, 500) of claim 7, wherein the electrically conductive coating (220) is applied to each of the posts (222).

9. The vehicle sensor assembly (200, 500) of any of claims 1-8, wherein at least a subset of the antenna slots (215A/215B, 416) is defined in an array of staggered antenna slot arrays (415A/415B) each comprising a first row of antenna slots (416) extending along a first line and a second row of antenna slots (416) extending along a second line and offset from the first row of antenna slots (416).

10. The vehicle sensor assembly (200, 500) of claim 9, wherein the electrically conductive coating (420) is applied to walls defining each antenna slot (416) of each staggered antenna slot array (415A/415B).

11. The vehicle sensor assembly (200, 500) of claim 10, wherein the electrically conductive coating (420) is applied to entire surfaces of each of the walls defining each antenna slot (416) of each staggered antenna slot array (415A/415B).

12. The vehicle sensor assembly (200, 500) of any of claims 9-11, wherein each of the staggered antenna slot arrays (415A/415B) is positioned in a respective bounded region (417) of the antenna part (400) in which each slot (416) of each staggered antenna slot array (415A/415B) is wholly contained, and wherein the electrically conductive coating (420) is further applied to each of the bounded regions (417) of the antenna part (400).

13. The vehicle sensor assembly (200, 500) of claim 1, wherein the waveguide part (402) comprises a metallic block, wherein the antenna part (400) comprises a plate (400) coupled to the metallic block, and wherein the plate (400) comprises an electrically conductive coating (420) at least substantially covering the plate (400) on a side (412) facing the metallic block.

14. The vehicle sensor assembly (200, 500) of any of claims 1-13, wherein the electrically conductive coating (120, 220, 420) is applied to each wall defining each of the antenna slots (215A/215B, 416).

15. The vehicle sensor assembly (200, 500) of any of claims 1-14, wherein the electrically conductive coating (120, 220, 420) comprises an electroplated, metallic coating.
